# EUROPEAN PATENT SPECIFICATION

(11) **EP 3 078 548 B1**
(45) Date of publication and mention of the grant of the patent: **29.08.2018**
(21) Application number: 15162983.9
(22) Date of filing: 09.04.2015
(51) Int. Cl.: B60R 11/06, A47B 57/04

(54) **A STORAGE SYSTEM**
SPEICHERSYSTEM
SYSTÈME DE STOCKAGE

(43) Date of publication of application: 12.10.2016
(73) Proprietor: Modul-System HH AB, 431 22 Mölndal (SE)
(72) Inventor: Carlsson, Anders, 422 50 Hisings Backa (SE)
(74) Representative: AWA Sweden AB

(56) References cited:
- EP-A1- 2 397 049
- EP-A1- 3 067 238
- JP-A- 2005 096 532
- JP-A- 2005 124 802
- JP-A- 2014 094 064
- JP-U- S5 513 840
- KR-U- 20130 000 227
- US-A- 1 892 687
- US-A- 4 611 721
- US-A- 5 058 844
- US-A1- 2014 117 063

## Description

### Field of the Invention

The present invention relates to a storage system attachable to an inner surface of a cargo or a back space of a service vehicle.

### Technical Background

It is common practise in the art of service vehicles to equip a back space or a cargo space of an automotive vehicle with module systems for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the back space of the vehicle is provided with an inner floor, usually made of wood, but the floor might also be made of for example an artificial, plastic material. This floor functions as a good support to work, stand and walk upon and may also used as an anchor plate for the module unit.

The module unit is often also at least partly attached to the wall and the purpose is to counteract that the unit tip for example in a turn. It is common practise to secure the module unit/units to the wall with fasteners, with screws or the like penetrating the vehicle wall. There is also a risk during acceleration or retardation of the vehicle, that a module system or maybe one module unit thereof can break away which may cause damages. The module units, in particular when they are equipped with tools and material which are included in a toolkit, are usually rather heavy and may in such case present a potential safety risk. During retardation of the vehicle the module system may, if not securely attached, move forward with a large force and which in a serious scenario may break through into the driver cabin and thereby even cause personal injuries.

An example of a shelf is shown in US20140265789 where the shelves are attached to rails on a wall via a lug and groove connection which allows for folding of the shelves by using different lug-groove connections. However, with this solution, there is e.g. a substantial risk that the shelves move during retardation and acceleration of the vehicle, thereby suffering from the above discussed drawbacks.

US 2014/0117063 discloses a storage system according to the preamble of claim 1 and describes a stretcher receiving system for installation in an interior compartment of a vehicle. A plurality of adjustable mounting assemblies can be attached to an interior surface of the vehicle compartment. The mounting assemblies support an adjustable frame assembly which may have at least two vertical posts. Interconnecting these vertical posts is at least one stretcher receiver adapted to hold an end of a stretcher.

### Summary of the Invention

The object of the present invention is to provide a storage system that overcomes the above issues.

The invention is based on the insight that by having a bracket for attaching a module unit to inner surface of the vehicle, wherein the bracket is slidable but may be secured and thereby prevented from the sideways movement, a user-friendly module unit with reduced risk of causing damage in the interior of the vehicle or to personnel is obtained.

The invention relates to a storage system attachable to an inner surface of a cargo or a back space of a service vehicle, the system comprises:
a module unit,
at least one elongated fastening rail comprising at least one fastening zone, the elongated fastening rail being adapted to be attached to the inner surface of the cargo or back space of the service vehicle and to extend substantially horizontally,
a bracket adapted for attaching the module unit to the rail, the module unit being attachable to the bracket, the bracket comprising a guide portion adapted to be in contact with a part of the elongated fastening rail, the bracket further comprising a through-hole through a central body portion of the bracket,
a securing element adapted to extend through the through-hole of the bracket and to attach the bracket to the elongated fastening rail,
wherein, the securing element is adapted to secure the bracket to the fastening zone of the elongated fastening rail and to prevent the bracket from sliding on the elongated fastening rail.

The fastening rail together with the bracket and the securing elements provide means for great customization of the interior design of the back space. The fastening rail provides at least one fastening zone for module units such as shelves, cupboards, storage boxes or tool holding equipment. The fastening rail may also comprise fastening zones for fastening items such as inner wall panels, covering panels for covering inner ceiling or floor surfaces of a back space of a service vehicle. An item may also be a cable holder for holding cables, a profile for covering the joint where a wall panel and a roof or floor covering panel meet. An item may also be a holder for a lighting rail or a holder for other equipment. The item may be any other item a user would like to attach to the wall of the back space. The fastening rail may be cut into shorter elements, in order to fit different sized and shaped back spaces of vehicles, while still remaining its function.

That the elongated fastening rail are adapted to be attached to the inner surface of the cargo or back space of the service vehicle and to extend "substantially horizontally" should be interpreted as that a deviation from horizontal is possible. However, for convenience for a user the elongated fastening rails may be arranged as close as possible to horizontal, where horizontal means parallel with the floor of the cargo or back space of the vehicle.

The guide portion is adapted to prevent the bracket from rotation about an axis parallel with a central axis of the through-hole through the central body portion. The guide portion may have an extension such that the contact area between the guide portion and the part of the elongated fastening rail is larger than just a point, thus the contact area has an extension length such that a rotation is prevented. By reducing the possibility for the bracket to rotate, an improved support for the module unit is provided, for example the risk of the bracket (and thus the module unit) wobbling or swaying is reduced.

According to the invention, the module is pivotably attachable to the bracket, thereby the module unit is movable between at least a first position and a second position. A position is that the module unit is "tucked away" in a non-use position such that the module unit is not in the way for a user in need of more space. The module unit which is tucked away may not be needed at the time, thus the user may move away the module unit by a pivoting motion of the module unit. In another position (e.g. the first or the second position) the module unit is in a use position where a user may access the module unit. For example, the module unit may store items which the user needs at the time, thus the module unit may be moved to a use position. The moving of the module unit and the securing of the module unit to the elongated fastening rail may be done independently of each other. In other words, the bracket may be secured and thus prevented from sliding on the elongated fastening rail regardless of the position (first or second) of the module unit. Furthermore, the module unit may be moved between the two positions without de-securing the bracket or the module unit from the elongated fastening rail. The motion of the module unit is at least partly enabled by that the module unit is pivotably attached, thus the module unit may be pivotable as part of the motion of the module unit.

According to at least one exemplary embodiment, the part of the elongated fastening rail (where the guide portion may be in contact) may be an upper part of the elongated fastening rail. The upper part may be a part of the elongated fastening rail arranged on the upper half of the elongated fastening rail, where the halves are defined by dividing the elongated fastening rail along the elongation direction in two equally sized halves. If the elongated fastening rail is arranged in a cargo or back space of a vehicle, the upper part is on the half closer to the ceiling of the vehicle. By placing the part of the elongated fastening rail, being in contact with the bracket, on the upper half facilitates accessing the fastening zone with the securing element since the through-hole in the central body is then better aligned with the fastening zone. Furthermore, it may provide for hanging the bracket on the part of the elongated fastening rail during mounting.

According to at least one exemplary embodiment, the central body portion may be essentially planar and thereby extend in a plane, wherein the guide portion is a protrusion which extends in an angle to the planar central body portion. The guide portion in the form of a protrusion may extend in a direction substantially perpendicular (e.g. an "L"-shape) to the plane of the central body portion. The guide portion may protrude in a direction towards the elongated fastening rail such that it may provide vertical support for the bracket on the elongated fastening rail.

According to at least one exemplary embodiment, the storage system may further comprise a connection element, wherein the connection element may be a pin element being part of the bracket, wherein the pin element is adapted to extend into a through-hole of the module unit to pivotably attach the module unit to the bracket. The pin element may for example have a cylindrical shape protruding out from a surface of the bracket.

According to at least one exemplary embodiment, the bracket may preferably further comprise a second through-hole with an opening facing in a direction parallel with the elongation direction of the rail, the system may further comprise a connection element being adapted to extend through the second through-hole and through a through-hole of the module unit to pivotably attach the module unit to the bracket. In other words, as an alternative to the connection element being part of the bracket, the connection element may be a separate element comprised in the system. The second through-hole has a different orientation than the first through-hole (through the central body portion). For example, the orientations may be about 90 degrees apart. The second through-hole may have an opening facing in a direction parallel with the elongated fastening rail, when the bracket is mounted on the elongated fastening rail.

The second through-hole is preferably arranged offset from the plane of the bracket.

As an example, the connection element may comprise a bolt and a nut. As a further example, the connection element comprises an axle and a locking element which ensures that the connection element is pivotably attached to the module unit. For example, the connection element may comprise the axle with a circumferential groove and a locking ring (e.g. retaining ring or clip, or locking washer) arranged in the groove. The connection element may also be at least part of a hinge arrangement.

According to at least one exemplary embodiment, the opening of the through-hole of the module unit may have an elongated shape, wherein the module unit may be slidable along the elongated shape of the opening relative the connection element, wherein the connection element is at a first end portion of the elongated shape when the module unit is in the first position, and at a second end portion of the elongated shape when the module unit is in the second position. In other words, the connection element slides in the elongated through-hole when the module unit is rotated between the first and the second position, or when the module unit is rotated between the second and the first position. The connection element slides in the elongated through-hole without exiting the through-hole, thus the connection element remains in the through-hole through-out the sliding along the elongation. As a further part of the motion of the module unit, the module unit is movable in correspondence with the sliding of the connection element in the elongated through-hole. That the connection element is at the first or the second end portion does not require that the connection element is in contact with the end portion but merely that the connection element is on a side of the elongated through-hole. Thus, the end portions may even be a half of the elongated through-hole, or at least one third (1/3) of the length of the elongated through-hole.

According to at least one exemplary embodiment, in the second position where the connection element is at the second end portion, a side portion of the module unit may be in contact with the elongated fastening rail or the bracket, thereby a rotation of the module unit to the first position is prevented. Thus, the module unit is only rotatable between the first and the second positions when the connection element is at the first end portion. Thereby, the module unit may be advantageously locked in the second position and prevented from rotating back to the first position, without manual assistance moving the module unit such that the connection element is again at the first end portion of the elongated through-hole.

According to at least one exemplary embodiment, the connection element may be arranged in a portion of the bracket extending away from the elongated fastening rail during use, wherein the portion protrudes from the planar central body portion in an angle. By having the portion where the connection element is arranged offset from the plane of the bracket a rotational motion of the module unit is facilitated due to additional space that is available for the rotation, as a result of the offset placement of the portion. Furthermore, the portion where the connection element is arranged is preferably an upper portion of the bracket. The upper part faces the ceiling when arranged in a vehicle. In case of the connection element being a bolt or comprises an axle, the bolt or the axle axis is offset from the planar central body portion of the bracket.

According to at least one exemplary embodiment, the module unit may comprise an attachment part comprising the elongated through-hole. Thus, the module unit may be made in more than one piece. This advantageously enables replacement of shelves of the system.

According to the invention the module unit is a shelf.

According to at least one exemplary embodiment, wherein the fastening zone of the elongated fastening rail comprises an undercut portion being part of an undercut groove, wherein the securing element is adapted to press against the undercut portion during use when the bracket is securely attached to the fastening zone. Thereby, there is provided an easy to use and flexible solution for securing the bracket to the elongated fastening rail.

According to at least one exemplary embodiment, wherein the securing element comprises a first securing element part arranged through the through-hole of the bracket and a second securing element part arranged to be attached to the first securing element part to attach the bracket on the elongated fastening rail, wherein the undercut groove further comprises a second undercut portion arranged on an opposite side of an opening of the groove, wherein the securing element has a dimension larger that the opening, thereby the second securing element is adapted to press against both the first and the second undercut portion during use.

According to at least one exemplary embodiment, wherein the first and the second securing element part respectively are a bolt and a nut, preferably a T-nut. A T-nut has a T-shaped cross-section and may be held in place in the undercut groove by the undercut portions.
According to at least one exemplary embodiment, the first position and the second position of the module unit may be about 90 degrees apart. Naturally, deviations from 90 degrees are possible, e.g. 120 degrees, 110 degrees, 105 degrees, 95 degrees, 85 degrees, 80 degrees, or 70 degrees apart (the list is non-exhaustive).

In one embodiment, there is provided a vehicle comprising a storage system.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 shows an open-up perspective view of a service vehicle comprising a storage system according an example embodiment of the invention;
Fig. 2 shows an exploded perspective view of a storage system according to an example embodiment of the invention;
Fig. 3a-b each shows perspective view of an example bracket;
Fig. 4 shows a cross-section of an example bracket attached to an elongated fastening rail with a securing element;
Fig. 5a shows a perspective view of an example embodiment of the invention with a module unit in a first position; and
Fig. 5b shows a perspective view of an example embodiment of the invention with a module unit in a second position.

All the figures are highly schematic, not necessarily to scale, and they show only parts which are necessary in order to elucidate the invention, other parts being omitted or merely suggested.

### Detailed Description of Example Embodiments

Example embodiments of the invention will be described in more detail in the following with reference to the accompanying drawings.

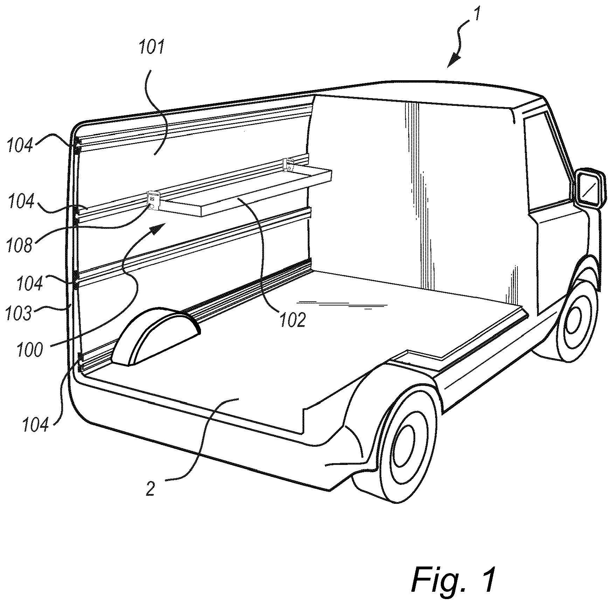

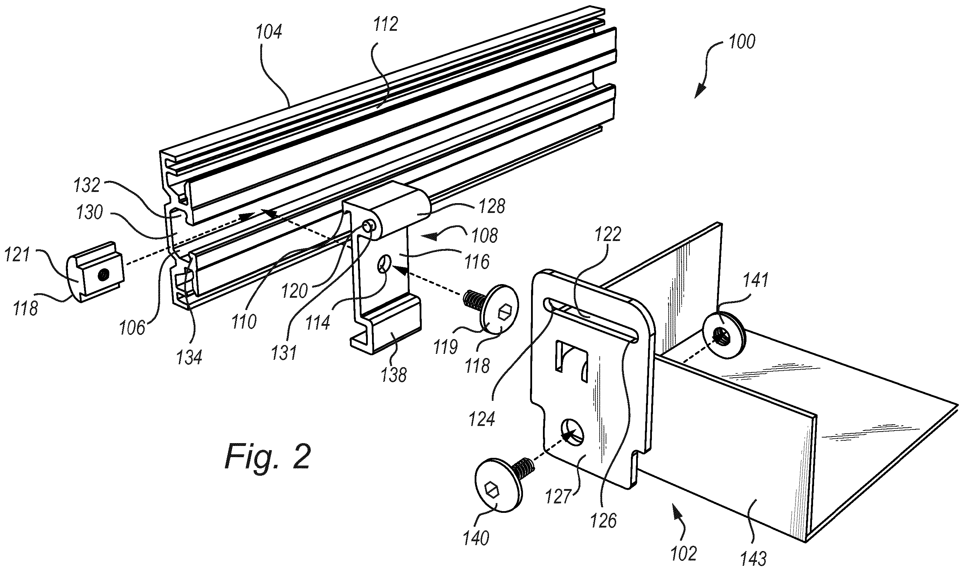

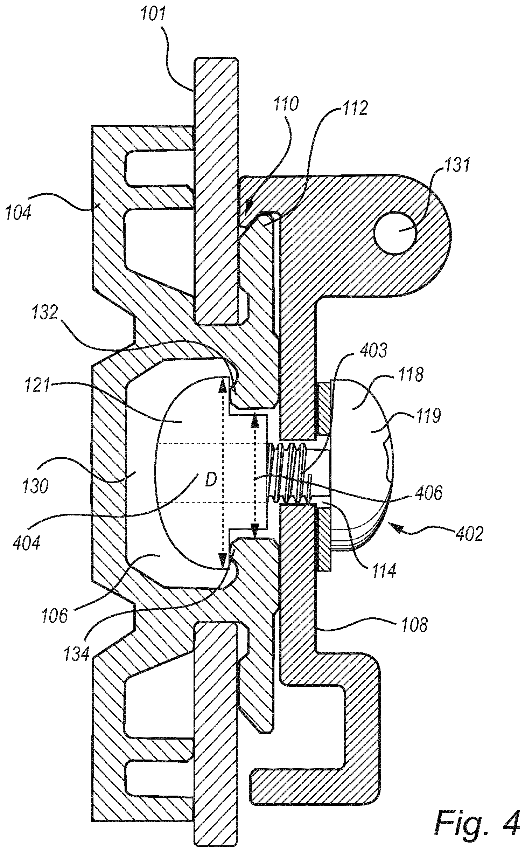

Fig. 1 shows a back space 2 of a service vehicle 1 comprising an example storage system 100. However, the back space could be a cargo space. The storage system 100 comprises of several elongated fastening rails 104, a module unit 102, and two brackets 108 of which one is not shown in Fig. 1. The fastening rails 104 are attached to the inside surface 101, 103 of a vehicle wall, i.e. to the inner wall 101 of the back space 2 of the service vehicle 1 and/or directly attached with e.g. bolts to the side wall 103 of the vehicle (e.g. attached to the vehicle body). In other words, the inner wall 102 may be omitted. The fastening rails 104 may be bolted or glued to the side wall 103 of the vehicle 1. Alternatively, the fastening rails 104 are attached to the side wall 103 and the inner wall 101 is glued to the fastening rails 104. The elongated fastening rails are arranged in a horizontal orientation; in this example embodiment (Fig. 1) the elongated fastening rails 104 are orientated in the main forward direction of the service vehicle i.e. in the longitudinal direction of the vehicle. However depending on the shape of the back space there may be occasions where the elongated fastening rails may be mounted transversely or partly transversely in relation to the forward direction of the service vehicle. Horizontal may be interpreted as parallel with the floor of the cargo or back space of the vehicle. Further, the elongated fastening rails 104 comprises the same design as the elongated fastening rail 104 in Fig. 2 and Fig. 4 and will hence be further discussed in connection with Fig. 2 and Fig. 4.

In Fig. 1 a module unit 102 in the form of a shelf is shown.

Fig. 2 illustrates an exploded view of a storage system 100 according to an embodiment of the invention. In Fig. 2 it is shown an elongated fastening rail 104 which may be mounted to an inner surface 101 of a service vehicle as shown in Fig. 1. There is further shown a bracket 108, a module unit 102, and a securing element 118. The bracket 108 has a guide portion 110 which is here shown in the form of a protrusion 110. The guide portion may however be embodied in other ways, for example as taps/protrusions extending from the bracket 108 into the undercut groove 130, thereby being in contact with a part of the elongated fastening rail e.g. inside the groove 130. In this shown embodiment, the guide portion 110 is adapted to be in contact with a part 112 of the elongated fastening rail 104. The part 112 is here an upper part 112 of the elongated fastening rail 104, where upper refers to the direction (with respect to the location of the elongated fastening rail 104) of the ceiling in e.g. a back space of a service vehicle when the elongated fastening rail 104 is mounted there. The bracket may be supported by the upper part 112 of the elongated fastening rail by allowing the protrusion 110 to rest on the upper part 112. Furthermore, the guide part (being e.g. a protrusion) being in contact with the upper part 112 prevents the bracket 108 from rotating about an axis (an imaginary axis) through the through-hole 114. Thus, the guide portion 110 is hindered by the upper edge 112 from rotational movement when in contact with the upper edge 112.

There is also shown a securing element 118 which is adapted to secure the bracket 108 to a fastening zone 106 of the elongated fastening rail 104. Here the securing element 118 is shown as two securing element parts: a bolt 119 and a T-nut 121, but other solutions are of course possible. The securing element 118 is adapted to prevent the bracket from sliding on the elongated fastening rail 104. As will be explained in more detail with reference to Fig. 4, in the fastening zone 106 of the elongated fastening rail 104, there is an undercut groove 130 in which the T-nut 121 is placed. The undercut groove 130 comprises a first 132 and a second 134 undercut portion. When securing the bracket 108 to the elongated fastening rail 104, the securing element 118 presses on the undercut portions 132, 134.

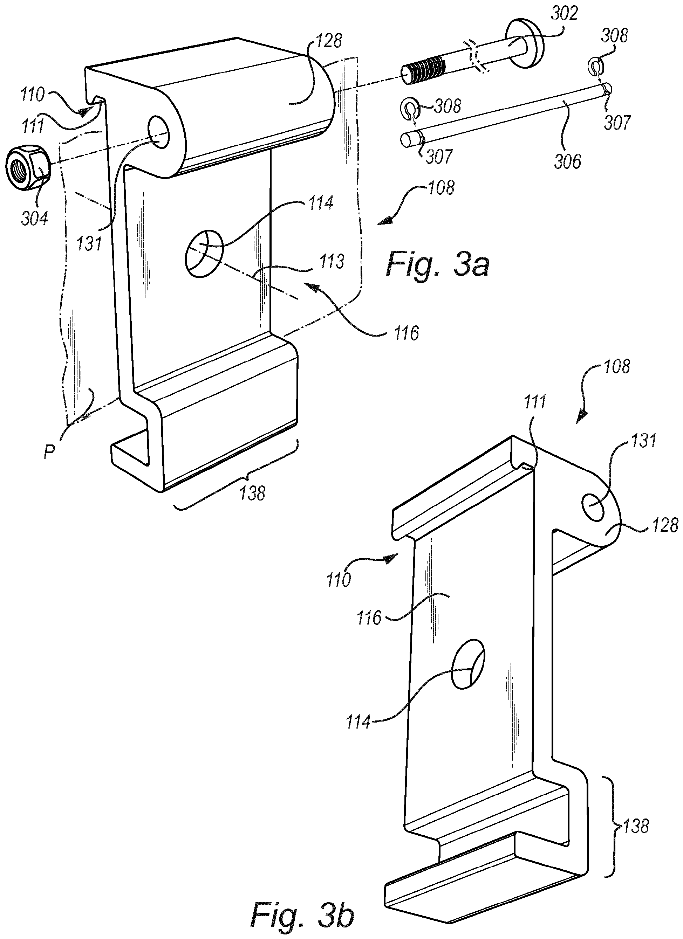

The storage system 100 further comprises a connection element 120 which is here shown as an axle 120 or a bolt 120 having a locking element in the form of a e.g. locking ring or a nut, respectively (see Fig. 3a-b). The connection element 120 is arranged in a portion 128 of the bracket 108 extending away from the elongated fastening rail 104 during use (thus, when mounted on the rail 104), and offset from a plane of the central body 116. The portion 128 is an upper portion of the bracket 108. Furthermore, the connection element 120 is arranged in a second through-hole 131 (see also e.g. Fig. 3a-b) of the bracket, the second through-hole is offset from a plane (P in Fig. 3a-b) of the central body portion 116.

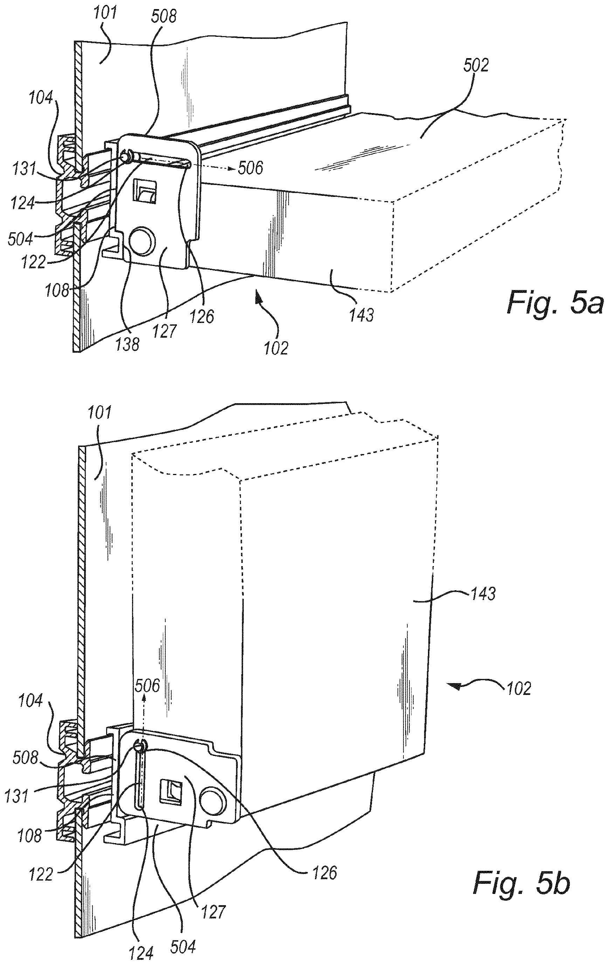

The module unit 102 has a through-hole 122 which here is shown as having an elongated opening 122 having a first end portion 124 and a second end portion 126 separated by the main section of the through-hole 122. The through-hole 122 is here shown to be arranged in a separate attachment element 127 which is attached to a drawer part 143 or shelf part 143 with a fastening element which may for example be a bolt 140 and a nut 141, although other solutions are possible. For example, the attachment element 127 and the remaining part 143 shelf) may be made in one piece as a module unit 102. The function of the through-hole 122 will be explained in more detail with reference to Fig. 5a-b. The module unit 102 may be attached to the bracket 108 via a rigid attachment or a pivotable attachment. With a rigid attachment the module unit 102 is not pivotable about the attachment via the connection element 102 but is rigidly attached. In case of the rigid attachment, the elongated through-hole 122 need not be elongated, but may of another type, e.g. a straight through-hole suitable for a rigid attachment with e.g. a bolt or similar.

Fig. 3a and Fig. 3b each illustrates a perspective view of an example bracket 108 of the invention. The bracket 108 comprises a central body portion 116 which is essentially planar. The bracket 108 has a guide portion 110, a through-hole 114 through the central body portion 116, a second through-hole 131 through a portion 128 extending away essentially perpendicular from the plane P of the central body portion 116, and a supporting portion 138. As shown here, the guide portion 110 is in the form of a protrusion 110 extending away from the plane P of the central body portion 116, but in an opposite direction compared to the portion 128. There is shown a groove 111 in the protrusion 110, however, although advantageous, the protrusion may be made without the groove 111, thus only with a straight protrusion. With the groove 111, the bracket 108 may more reliably be hung on the elongated fastening rail 104 since the part 112 of the elongated fastening rail 104 may be fitted into the groove 111. The guide portion 110, when arranged on the elongated fastening rail 104, prevents a rotation of the bracket 108 about a central axis 113 extending through the through-hole 114. Note that the axis 113 is an imaginary axis. Furthermore, a connecting element 120 may be arranged through the though-hole 131 for pivotably attaching a module unit to the bracket 108. In Fig. 3a, there is shown a connection element 120 in the form of a bolt 302 and a nut 304, and also an alternative being an axle 306 with a circumferential groove 307 and a locking ring 308. In case of a rigid attachment, the through-hole 131 may e.g. be threaded such that a bolt 302 may firmly attach the module unit 102 to the bracket 108; in that case the module unit is not pivotable.

Fig. 4 provides a cross-section of a bracket 108 attached to an elongated fastening rail 104 with a securing element 118. The securing element 118 comprises a bolt 119 with a head 402 and a threaded portion 403, and a T-nut 121 with a threaded hole 404 in which the threaded portion 403 may be tightened. The bracket 108 has a guide portion 110 which may be placed in contact with the upper portion 112 of the elongated rail 104, as explained with reference to e.g. Fig. 2. In Fig. 4, the bracket 108 is shown secured to the elongated fastening rail 104 by the securing element 118, i.e. by the bolt 119 and the T-nut 121. The bolt 119 is tightened through the through-hole 114 of the bracket 108 with the T-nut which causes the T-nut 121 to press against the undercut portions 132 and 134. Since the T-nut 121 has a dimension D larger than the opening 406 of the undercut groove 130 between the undercut portions 132, 134, the T-nut stays on the inside of the undercut groove 130 and is not pressed out of the undercut groove 130 through the opening 406. The T-nut may have a shape which allows the T-nut to be placed in the undercut groove 130 without having to slip the T-nut into the undercut groove 130 from the end of the elongated fastening rail 104.

Fig. 5a and Fig. 5b show a movable module unit 102 attached to a bracket 108 in two different positions, a first position (Fig. 5a), and a second position (Fig. 5b). In this example embodiment, the module unit is pivotably attached to the bracket via the connection element 120. The module unit is pivotable between the first and the second position. As shown herein, the first and the second position of the module unit is about 90 degrees apart. However, the 90 degrees apart is just an example, other relationships are also possible, e.g. 120 degree, 110 degrees, 105 degrees, 95 degrees, 85 degrees, 80 degrees, or 70 degrees (the list is non-exhaustive).

With reference to Fig. 5a, there is shown the module unit 102 in a first position being a use-position. In the use-position, the module unit 102 is arranged such that it extends away from the elongated fastening rail 104. In the shown example, the module unit 102 may be a shelf having a storage space 502 where items may be placed. In the use position the shelf is in a position such that a user may access the space 502. For example, when mounted in a vehicle back space, the space 502 of the module unit faces the ceiling of the back space in the use position. Furthermore, the connection element 120, which may either be e.g. a pin element or a bolt and nut, is arranged through the through-hole 122 of the module unit. This enables a pivotable attachment of the module unit 102 to the bracket 108. Thus, the module unit 102 is rotatable about the axis of the connection element 120 such that the module unit 102 may be rotated between the first (Fig. 5a) and the second position (Fig. 5b). The through-hole 122 has an elongated shape such that the connection element 120 may slide along the direction 506 of the elongation. In the use position (Fig. 5a) the connection element 120 is at a first end portion 124 of the elongated through-hole 122. In this first position, the pivot point for the module unit is at the first end portion 124 where the connection element 120 is located. The side portion 504 of the module unit provides support for the module unit 102 such that the module unit does not rotate any further downwards in a direction opposite to the ceiling. The support may be provided by contact between the side portion 504 and the elongated fastening rail 104 or the bracket 108, in Fig. 5a the support is between the side portion 504 and at least the supporting portion 138 of the bracket 108. However, if the module unit 102 is rotated in the opposite direction, in other words towards a non-use position (the second position, Fig. 5b) the side portion 504 is separated from the elongated fastening rail 104. As the rotation continues, the elongation direction 506 of the through-hole 122 approaches a vertical alignment, and the connection element slides in the elongated through-hole 122 in the elongation direction 506 of the through-hole 122. In the non-use position shown in Fig. 5b, the elongation direction 506 points upwards, e.g. towards the ceiling of the vehicle 1 (Fig. 1) if placed in the back space of the vehicle. The connection element 120 is now at the second end portion 126 of the elongated through-hole 122. Thus, the pivot point of the module unit 102 has changed, and now a second side portion 508 provides support to prevent rotation of the module unit back to the use-position. The support may be provided by contact between the side portion 508 and the elongated fastening rail 104 or the bracket 108, in Fig. 5b the support is between the side portion 504 and the bracket 108. In other words, the module unit has to be lifted such that the connection element 120 is at the first end portion 124 before the module unit 102 may be rotated back to the use position. This way, the module unit 102 may be securely stored in the non-use position without rotating back to the use position.

The module unit 102 illustrated in Fig. 5a-b is shown as a separate attachment part 127 with the elongated though-hole, attached to a shelf 143 with the storage space 502. However, the attachment element 127 and the remaining part 143 shelf may be made in one piece as a one piece module unit.

Furthermore, as described with reference to e.g. Fig. 2 and Fig. 4, there is a securing element 118 arranged to secure the bracket 108 to the elongated fastening rail 104. The securing element 118 is adapted to ensure that the module unit 102 is unable to slide along the elongated fastening rail 104. However, in case a user desires to intentionally move the module unit 102 sideways on the elongated fastening rail 104, then the securing element 118 is accessible in positions of the module unit 102 between the first position (Fig. 5a) and the second position (Fig. 5b). For example, by lifting the module unit 102 upwards in the direction 506 of the elongation of the through-hole 122 (the direction as shown in Fig. 5b), if the module unit is in the non-use position, the securing element 118 may be accessible (thus exposed and not covered by the module unit 102) and may thus be loosened or tightened. In addition, if the module unit is in the use-position, the module unit only needs to be rotated slightly towards the non-use position in order to access the securing element. Naturally, there are other positions then the above mentioned where the securing element 118 may be accessible to a user.

## Claims

1. A storage system (100) attachable to an inner surface (101 ;103) of a cargo (2) or a back space (2) of a service vehicle, said system comprises:
a module unit (102),
at least one elongated fastening rail (104) comprising at least one fastening zone (106), said elongated fastening rail being adapted to be attached to said inner surface of said cargo or back space of said service vehicle and to extend substantially horizontally,
a bracket (108) adapted for attaching said module unit to said rail, said module unit being attachable to said bracket, said bracket comprising a guide portion (110) adapted to be in contact with a part (112) of said elongated fastening rail, said bracket further comprising a through-hole (114) through a central body portion (116) of said bracket,
a securing element (118) adapted to extend through said through-hole of said bracket and to attach said bracket to said fastening zone of said elongated fastening rail,
wherein, said securing element (118) is adapted to secure said bracket (108) to said elongated fastening rail (104) and to prevent said bracket (108) from sliding on said elongated fastening rail (104), wherein said module unit (102) is pivotably attachable to said bracket (108), thereby said module unit (102) is movable between at least a first position and a second position, **characterized in that** said module unit is a shelf, wherein said first position is a use position, and wherein said second position is a non-use position to which the module unit is movable by rotation of the module unit towards the ceiling of the back space of the service vehicle.

2. The storage system according to claim 1, wherein said bracket further comprises a second through-hole (131) with an opening facing in a direction parallel with said elongation direction of said rail, said system further comprising a connection element (120) being adapted to extend through the second through-hole and through a through-hole of said module unit to pivotably attach said module unit to said bracket.

3. The storage system according to claim 2, wherein said second through-hole is arranged offset from said plane of said bracket.

4. The storage system according to claim 2 or 3, wherein said connection element comprises a bolt (302) and a nut (304) or an axle (306) and a lock element (308).

5. The storage system according to any one of claims 2 to 4, wherein the opening of said through-hole of said module unit has an elongated shape, wherein said module unit is slidable along said elongated shape of the opening relative the connection element, wherein said connection element is at a first end portion (124) of said elongated shape when said module unit is in the first position, and at a second end portion (126) of said elongated shape when said module unit is in the second position.

6. The storage system according to claim 5, wherein, in said second position, wherein said connection element is at said second end portion, a side portion (508) of said module unit is in contact with said elongated fastening rail or said bracket, thereby a rotation of said module unit to said first position, is prevented.

7. The storage system according to any one of claims 2 to 6, wherein said module unit comprises an attachment part (127) comprising the elongated through-hole.

8. The storage system according to any one of the preceding claims, wherein said central body portion is essentially planar and thereby extends in a plane, wherein said guide portion is a protrusion which extends in an angle to said planar central body portion.

9. The storage system according to any one of the preceding claims, wherein said fastening zone of said elongated fastening rail comprises an undercut portion (132, 134) being part of an undercut groove (130), wherein said securing element is adapted to press against said undercut portion during use when said bracket is securely attached to said fastening zone.

10. The storage system according to claim 9, wherein said securing element comprises a first securing element part (119) arranged through said through-hole of said bracket and a second securing element part (121) arranged to be attached to said first securing element part to attach said bracket on said elongated fastening rail, wherein said undercut groove further comprises a second undercut portion (132, 134) arranged on an opposite side of an opening of said groove, wherein said securing element has a dimension (D) larger that said opening, thereby said second securing element is adapted to press against both the first and the second undercut portion during use.

11. The storage system according to any one of the preceding claims, wherein said first and said second securing element part respectively is a bolt (119) and a nut (121), preferably a T-nut.

12. The storage system according to any one of the preceding claims, wherein said first position and said second position of said module unit is about 90 degrees apart.

13. The storage system according to any one of the preceding claims, wherein said part of said elongated fastening rail is an upper part of said elongated fastening rail.

14. A vehicle comprising the storage system according to any one of the preceding claims.

## Patentansprüche

1. Aufbewahrungssystem (100), das an eine innere Fläche (101, 103) eines Lager- (2) oder eines Hinterraums (2) eines Nutzfahrzeugs anbringbar ist, wobei das System Folgendes umfasst:
eine Moduleinheit (102),
mindestens eine längliche Befestigungsschiene (104), die mindestens eine Befestigungszone (106) umfasst, wobei die längliche Befestigungsschiene ausgelegt ist, um an die innere Fläche des Lade- oder Hinterraums des Nutzfahrzeugs angebracht zu sein und um sich im Wesentlichen horizontal zu erstrecken,
eine Halterung (108), die zum Anbringen der Moduleinheit an der Schiene ausgelegt ist, wobei die Moduleinheit an die Halterung anbringbar ist, wobei die Halterung einen Führungsabschnitt (110) umfasst, der ausgelegt ist, um mit einem Teil (112) der länglichen Befestigungsschiene in Kontakt zu sein, wobei die Halterung ferner ein Durchgangsloch (114) durch einen mittigen Körperabschnitt (116) der Halterung umfasst,
ein Sicherungselement (118), das ausgelegt ist, um sich durch das Durchgangsloch der Halterung zu erstrecken und um die Halterung an der Befestigungszone der länglichen Befestigungsschiene anzubringen,
wobei das Sicherungselement (118) ausgelegt ist, um die Halterung (108) an der länglichen Befestigungsschiene (104) zu sichern und um zu verhindern, dass sich die Halterung (108) auf der länglichen Befestigungsschiene (104) verschiebt, wobei die Moduleinheit (102) schwenkbar an der Halterung (108) anbringbar ist, wodurch die Moduleinheit (102) zwischen mindestens einer ersten Position und einer zweiten Position bewegbar ist,
**dadurch gekennzeichnet, dass** die Moduleinheit eine Ablage ist, wobei die erste Position eine Gebrauchsposition ist und wobei die zweite Position eine Nichtgebrauchsposition ist, zu der die Moduleinheit durch Drehung der Moduleinheit hin zu der Decke des Hinterraums des Nutzfahrzeugs bewegbar ist.

2. Aufbewahrungssystem nach Anspruch 1, wobei die Halterung ferner ein zweites Durchgangsloch (131) mit einer Öffnung umfasst, die in eine Richtung parallel zu der Längsrichtung der Schiene gewandt ist, wobei das System ferner ein Verbindungselement (120) umfasst, das ausgelegt ist, um sich durch das zweite Durchgangsloch und durch ein Durchgangsloch der Moduleinheit zu erstrecken, um die Moduleinheit schwenkbar an der Halterung anzubringen.

3. Aufbewahrungssystem nach Anspruch 2, wobei das zweite Durchgangsloch versetzt von der Ebene der Halterung angeordnet ist.

4. Aufbewahrungssystem nach Anspruch 2 oder 3, wobei das Verbindungselement einen Bolzen (302) und eine Mutter (304) oder eine Achse (306) und ein Verriegelungselement (308) umfasst.

5. Aufbewahrungssystem nach einem der Ansprüche 2 bis 4, wobei die Öffnung des Durchgangslochs der Moduleinheit eine längliche Form hat, wobei die Moduleinheit entlang der länglichen Form der Öffnung relativ zu dem Verbindungselement verschiebbar ist, wobei das Verbindungselement an einem ersten Endabschnitt (124) der länglichen Form ist, wenn die Moduleinheit in der ersten Position ist, und an einem zweiten Endabschnitt (126) der länglichen Form, wenn die Moduleinheit in der zweiten Position ist.

6. Aufbewahrungssystem nach Anspruch 5, wobei in der zweiten Position, in der das Verbindungselement an dem zweiten Endabschnitt ist, ein Seitenabschnitt (508) der Moduleinheit mit der länglichen Befestigungsschiene oder der Halterung in Kontakt ist, wodurch eine Drehung der Moduleinheit zu der ersten Position verhindert wird.

7. Aufbewahrungssystem nach einem der Ansprüche 2 bis 6, wobei die Moduleinheit einen Anbringungsteil (127) umfasst, der das längliche Durchgangsloch umfasst.

8. Aufbewahrungssystem nach einem der vorhergehenden Ansprüche, wobei der mittige Körperabschnitt im Wesentlichen planar ist und sich daher in einer Ebene erstreckt, wobei der Führungsabschnitt ein Vorsprung ist, der sich in einem Winkel zu dem planaren mittigen Körperabschnitt erstreckt.

9. Aufbewahrungssystem nach einem der vorhergehenden Ansprüche, wobei die Befestigungszone der länglichen Befestigungsschiene einen hinterschnittenen Abschnitt (132, 134) umfasst, der Teil einer hinterschnittenen Nut (130) ist, wobei das Sicherungselement ausgelegt ist, um gegen den hinterschnittenen Abschnitt während des Gebrauchs zu drücken, wenn die Halterung sicher an der Befestigungszone angebracht ist.

10. Aufbewahrungssystem nach Anspruch 9, wobei das Sicherungselement einen ersten Sicherungselementteil (119) umfasst, der durch das Durchgangsloch der Halterung angeordnet ist, und einen zweiten Sicherungselementteil (121), der angeordnet ist, um an dem ersten Sicherungselementteil angebracht zu sein, um die Halterung auf der länglichen Befestigungsschiene anzubringen, wobei die hinterschnittene Nut ferner einen zweiten hinterschnittenen Abschnitt (132, 134) umfasst, der auf einer Seite gegenüber einer Öffnung der Nut angeordnet ist, wobei das Sicherungselement eine Abmessung (D) hat, die größer ist als die Öffnung, wodurch das zweite Sicherungselement ausgelegt ist, um gegen sowohl den ersten als auch den zweiten hinterschnittenen Abschnitt während des Gebrauchs zu drücken.

11. Aufbewahrungssystem nach einem der vorhergehenden Ansprüche, wobei der erste und der zweite Sicherungselementteil jeweils ein Bolzen (119) und eine Mutter (121), vorzugsweise eine T-Mutter, sind.

12. Aufbewahrungssystem nach einem der vorhergehenden Ansprüche, wobei die erste Position und die zweite Position der Moduleinheit etwa 90 Grad auseinanderliegen.

13. Aufbewahrungssystem nach einem der vorhergehenden Ansprüche, wobei der Teil der länglichen Befestigungsschiene ein oberer Teil der länglichen Befestigungsschiene ist.

14. Fahrzeug, das das Aufbewahrungssystem nach einem der vorhergehenden Ansprüche umfasst.

## Revendications

1. Système de stockage (100) rattachable à une surface intérieure (101 ; 103) d'un espace de cargaison (2) ou arrière (2) d'un véhicule utilitaire (100), ledit système comprenant :
une unité de module (102),
au moins un rail de fixation allongé (104) comprenant au moins une zone de fixation (106), ledit rail de fixation allongé étant apte à être fixé à ladite surface intérieure dudit espace de cargaison ou arrière dudit véhicule utilitaire et à s'étendre sensiblement à l'horizontale,
une console (108) apte à fixer ladite unité de module audit rail, ladite unité de module pouvant être rattachée à ladite console, ladite console comprenant un segment de guidage (110) apte à être en contact avec une partie (112) dudit rail de guidage allongé, ladite console comprenant en outre un trou traversant (114) dans une section de corps centrale (116) de ladite console,
un élément de fixation (118) apte à s'étendre dans ledit trou traversant de ladite console et à rattacher ladite console à ladite zone de fixation dudit rail de fixation allongé,
dans lequel ledit élément de connexion (118) est apte à fixer ladite console (108) audit rail de fixation allongé (104) et à empêcher ladite console (108) de glisser sur ledit rail de fixation allongé (104), ladite unité de module (102) étant rattachable de manière pivotable à ladite console (108), ladite unité de module (102) étant mobile entre au moins une première position et une seconde position,
**caractérisé en ce que** ladite unité de module est une étagère, ladite première position étant une position d'utilisation et ladite seconde position étant une position de non-utilisation vers laquelle l'unité de module est mobile par rotation de l'unité de module vers le plafond de l'espace arrière du véhicule utilitaire.

2. Système de stockage selon la revendication 1, dans lequel ladite console comprend en outre un second trou traversant (131) doté d'une ouverture tournée dans un sens parallèle audit sens d'élongation dudit rail, ledit système comprenant en outre un élément de connexion (120) qui est apte à s'étendre dans le second trou traversant et dans un trou traversant de ladite unité de module pour rattacher de manière pivotable ladite unité de module à ladite console.

3. Système de stockage selon la revendication 2, dans lequel ledit second trou traversant est pratiqué en le décalant dudit plan de ladite console.

4. Système de stockage selon la revendication 2 ou 3, dans lequel ledit élément de connexion comprend un boulon (302) et un écrou (304) ou un arbre (306) et un élément de verrouillage (308).

5. Système de stockage selon l'une quelconque des revendications 2 à 4, dans lequel l'ouverture dudit trou traversant de ladite unité de module a une forme allongée, ladite unité de module pouvant glisser le long de la forme allongée de l'ouverture par rapport à l'élément de connexion, ledit élément de connexion se situant à une première section terminale (124) de ladite forme allongée lorsque ladite unité de module est dans la première position et une seconde section terminale (126) de ladite forme allongée lorsque ladite unité de module est dans la seconde position.

6. Système de stockage selon la revendication 5, dans lequel, dans ladite seconde position, ledit élément de connexion se situant au niveau de ladite seconde section terminale, une section latérale (508) de ladite unité de module est en contact avec ledit rail de fixation allongé ou ladite console, ceci empêchant une rotation de ladite unité de module vers ladite première position.

7. Système de stockage selon l'une quelconque des revendications 2 à 6, dans lequel ladite unité de module comprend une pièce de rattachement (127) comprenant le trou traversant allongé.

8. Système de stockage selon l'une quelconque des revendications précédentes, dans lequel ladite section de corps centrale est sensiblement planaire et s'étend ainsi dans un plan, ladite section de guidage étant une saillie qui s'étend en angle par rapport à ladite section de corps centrale planaire.

9. Système de stockage selon l'une quelconque des revendications précédentes, dans lequel ladite zone de fixation dudit rail de fixation allongé comprend une section contre-dépouillée (132,134) faisant partie d'une gorge contre-dépouillée (130), ledit élément de fixation étant apte à appuyer contre ladite section contre-dépouillée en cours d'utilisation lorsque ladite console est rattachée de manière sûre à ladite zone de fixation.

10. Système de stockage selon la revendication 9, dans lequel ledit élément de fixation comprend une première pièce d'élément de fixation (119) disposée dans ledit trou traversant de ladite console et une seconde pièce d'élément de fixation (121) disposée de manière à être rattachée à première pièce d'élément de fixation pour fixer ladite console sur ledit rail de fixation allongée ladite gorge contre-dépouillée comprenant en outre une seconde section contre-dépouillée (132, 134) disposée sur une face opposée d'une ouverture de ladite gorge, ledit élément de fixation ayant une dimension (D) supérieure à celle de ladite ouverture, ledit second élément de fixation étant ainsi apte à appuyer à la fois contre la première et la seconde section contre-dépouillée en cours d'utilisation.

11. Système de stockage selon l'une quelconque des revendications précédentes, dans lequel ladite première et ladite seconde pièce d'élément de fixation sont respectivement (119) et un écrou (121), de préférence un écrou en T.

12. Système de stockage selon l'une quelconque des revendications précédentes, dans lequel ladite première position et ladite seconde position de ladite unité de module sont écartées d'environ 90 degrés.

13. Système de stockage selon l'une quelconque des revendications précédentes, dans lequel ladite pièce dudit rail de fixation allongée est une pièce supérieure dudit rail de fixation allongé.

14. Véhicule comprenant le système de stockage selon l'une quelconque des revendications précédentes.
